# EUROPEAN PATENT SPECIFICATION

(11) **EP 1 209 567 B1**
(45) Date of publication and mention of the grant of the patent: **29.06.2005**
(21) Application number: 00830766.2
(22) Date of filing: 21.11.2000
(51) Int. Cl.: G06F 11/36

(54) **Method and system for real time debugging a source program, particularly for DSP**
Vorrichtung und Verfahren zur Echtzeitfehlerbeseitigung von Quellprogrammen, insbesondere für DSP
Système et procédé de deboggage d'un programme source en temps réel, en particulier pour un DSP

(43) Date of publication of application: 29.05.2002
(73) Proprietor: Siemens Mobile Communications S.p.A., 20126 Milano (IT)
(72) Inventor: Canosi, Claudio, 27010 Valle Salimbene (PV) (IT); De La Cruz, Rafael Andreas Marin, 20128 Milano (IT)

(56) References cited:
- US-A- 5 127 103
- US-A- 5 983 366
- DATABASE WPI Section EI, Week 198929, 20 May 1989 (1989-05-20) Derwent Publications Ltd., London, GB; Class T01, AN 1989-212227 XP002164873 ANONYMOUS: "Instrumentation aid for programming diagnostic tool - determines where extra code should be added to provide instrumentation functions and inserts code in appropriate position" & RESEARCH DISCLOSURE, vol. 302, no. 081, 10 June 1989 (1989-06-10),
- WILLIAMS T: "TOOLS TEST AND VERIFY CODE RUNNING IN EMBEDDED SYSTEMS" COMPUTER DESIGN,US,PENNWELL PUBL. LITTLETON, MASSACHUSETTS, vol. 34, no. 12, 1 December 1995 (1995-12-01), page 54,56 XP000550598 ISSN: 0010-4566

## Description

### FIELD OF THE INVENTION

The present invention relates to software debugging and in particular relates to a method and a relative system for real time monitoring the state of a source program while running on a user system.

### BACKGROUND OF THE INVENTION

Nowadays almost all complex system are controlled by a processor or a plurality of processors functionally connected with each other, each one executing an algorithm in order to monitor the functioning of the controlled system.

A widely used processor for these kind of operations is the so called DSP (Digital Signal Processor), particularly in telecommunication systems to manage the so called "physical level" of the network. Because of the wide diffusion of DSP (Digital Signal Processor) for executing algorithms for controlling systems, in this paper reference will be made to software programs running on a DSP though the invention can be conveniently applied, *mutatis mutandis,* to other kinds of processors.

A DSP cyclically executes a source program composed of a list of several different program modules, each module carrying out a specific operation on the system to be controlled.

In order to make the system work properly, it is very important to check the correct functioning of the program running on the DSP. This can be obtained monitoring the evolution of the "state" of the program, i.e. the values of all variables, and checking whether such values comply with the desired control of the system.

Actually there are several methods and systems for debugging a program, but all of them must stop the run of the source program to be tested to allow the inspection of the memory of the DSP that is executing the program. This is a great drawback particularly in cyclically running programs because, in order to inspect the memory of the DSP, the programmer must insert a breakpoint in the source program, thus stopping the running every time such a breakpoint is reached.

Moreover, several debuggers simply display the content of memory sectors, so a programmer must get the value of the variable to be monitored by identifying the memory sector in which such a value is stored.

For the above mentioned reason it is desirable a method and a system for monitoring the evolution of a running program, displaying the value of a certain variable to be monitored without being obliged to recognize it within the memory dump.
US 5 983 366 discloses a method and system for tracing execution of computer program in data processing system e.g. GSM transceiver with print messages. The overhead associated with generation of print statements for monitoring computer program execution is lessened, since host processor is used. The host processor communicates with data processor to identify selected parts of program to be executed.
The method includes providing a trace definition file containing a plurality of trace definition, each trace definition is an encoded identification of each print message to be used with the tracing of execution of the computer program of the data processing system and a format display specification of an output for providing a trace of the execution of the computer program. In particular said trace definition file includes real instructions whereas in the present application packets of pseudo-instructions are inserted rendering in this way the programming work easier.
In addition in the present application said upload points are enabled or disabled by the test designer, allowing the tracing in real time when the program is running and executed. On the contrary in the method disclosed in US 5 983 366 said trace definition is predetermined by sending a message to the host processor before the starting and running of the host processor trace system information.

### OBJECT AND SUMMARY OF THE INVENTION

It has been found and is the object of the present invention a method and a relative system for monitoring the functioning of a source program running on a user processor that is not affected by the above mentioned problems.

The method of the invention substantially consists in writing in the program source code a packet of pseudo-instructions ("upload point") containing the name of a variable to be monitored, in order to check if the source program is functioning correctly. Such pseudo-instructions are written in specific points of the program source code, in which may be necessary to monitor the value of certain variables, and are enabled by a test computer.

Before the compilation of the source program, a program ("TESTERPARSER") scans each instruction of the source program from start to end, substituting each pseudo instruction with corresponding real instructions constituting a certain subroutine. The resulting program after this substitution ("intermediate program") is compiled, thus obtaining the compiled program that will be executed by the user system. If the considered pseudo instruction belongs to an enabled upload point, its corresponding subroutine will display on the test system, during the run of the compiled program and without stopping it, the value of the variables to be monitored.

In this way the program can be monitored in real time during its run, and may be stopped only when the programmer decides so, because an incorrect value of a variable has been detected. This expedient is particularly useful in debugging cyclically running program, as in the case of DSP. When conventionally using breakpoints, as in the known debuggers, the execution would be stopped at each cycle. If the variable to be monitored assumes a correct value for N cycles and assumes an incorrect value at N+1^{th} cycle it's not possible to catch the wrong situation. With the present system the variables contents are continuously displayed reaching the faulted position after N+1^{th} cycles. Moreover having inserted tons of upload points the developer can decide to enable a continuously changed combination of inserted upload points monitoring different sets of variables.

Optionally, pseudo-instructions can also be used for displaying the content of memory sectors, by specifying in a pseudo-instruction the start address and the length of a memory sector whose content is to be displayed.

The system of the invention for real time monitoring the evolution of the state of a computer program running on a DSP, can be preferably realized using a test computer coupled through a PC Host Board to the DSP. The PC Host Board comprises another DSP connected to a serial gate of the first DSP, enabling or disabling certain packets of pseudo-instructions written in the program code and receiving the variables contents from the corresponding instructions constituting a certain subroutine.

The invention is more precisely defined in the attached claims.

### BRIEF DESCRIPTION OF THE DRAWINGS

The different aspects and advantages of the invention will become even more evident through a detailed description of a preferred embodiment referring to the attached drawings in which:
- **Figure 1**: is a preferred embodiment of the system of the invention;
- **Figure 2**: illustrates the organization of the data sent from TARGET_DSP to DSP_TESTER;
- **Figure 3**: schematically illustrates the functioning of the program TESTERPARSER installed in the developer compilation system;
- **Figure 4**: illustrates the organization of an user system constituted by one or several DSP in parallel.

### DESCRIPTION OF AN EMBODIMENT OF THE INVENTION

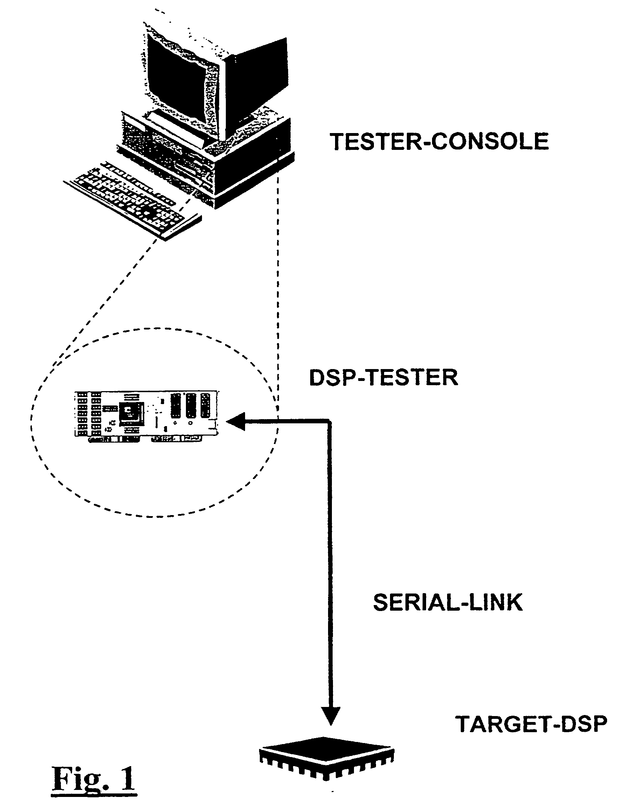

The method and system of the invention give the possibility of monitoring the evolution of a program while it is running, without interrupting it to display the content of certain sectors of the memory of the DSP. According to a preferred embodiment of the invention, this objective is attained by the system depicted in Fig. 1.

The system of the invention is constituted by a test system TESTER connected to an user system TARGET, which in the particular case depicted in Fig. 1 comprises a single DSP. The TESTER comprises a programmer interface TESTER_CONSOLE, through which a programmer may monitor the source program installed on the TARGET, and a PC Host Board comprising another DSP (DSP_TESTER) that communicates with the DSP (TARGET_DSP) of the user system TARGET.

Preferably the TESTER_CONSOLE is a PC with a 32 bit Windows operating system, the PC Host Board is a PCI/C6202-EVM board containing a DSP TMS320C6202 of Texas Instruments® (DSP_TESTER) and the TARGET comprises a DSP TMS320C6x of Texas Instruments® (TARGET_DSP).

The PC Host Board uses a data buffer, because information between the DSP_TESTER and the TARGET_DSP are transmitted at a higher rate than information from DSP_TESTER and the TESTER_CONSOLE, and it controls information traveling in the two opposite directions detecting eventual errors.

The present invention provides also a method for real time monitoring the evolution of the source program running on the TARGET_DSP without stopping its execution. This goal is attained inserting a number of "upload points" in the source program.

An upload point is a packet of pseudo-instructions, enabled or disabled by the DSP_TESTER, that identify corresponding instructions constituting a certain subroutine, for displaying on the TESTER_CONSOLE the value of variables to be monitored.

In order to let the programmer identify easily an upload point, each upload point is characterized by an identification label of the program module, the name of the function in which is written, and few comment words.

A possible syntax for the insertion of an upload point into the source program may be the following: 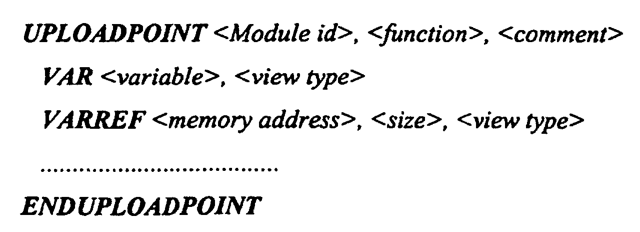 where:
- *<Module id>* is a label identifying the program module in which the upload point is written;
- *<function>* is the function name;
- *<comment>* is a quoted text written for comment purposes (e.g. "after encoding");
- *<variable>* is the name of the variable to be monitored;
- *<view type>* is a character or a string indicating the format in which the content of variable must be displayed on the TESTER (e.g. X-Hexadecimal, D-Decimal, B-Binary etc.);
- *<memory address>* is a pointer to a start address of a memory sector: this address can be a reference to an array element (e.g. *&buffer[23], &frame[index],* etc.), a reference to a structure field (e.g. *&block.size, &tstru.data[3]*, etc.), a pointer value (e.g. *(void *)pt)* or even a direct memory reference (e.g. *(void *)(0x213344));*
- *<size>* is the number of bytes to take from the memory address.

An example of insertion of an upload point in a source program written in C language and of the substitution of each pseudo-instruction in the corresponding instructions is shown in the followings:

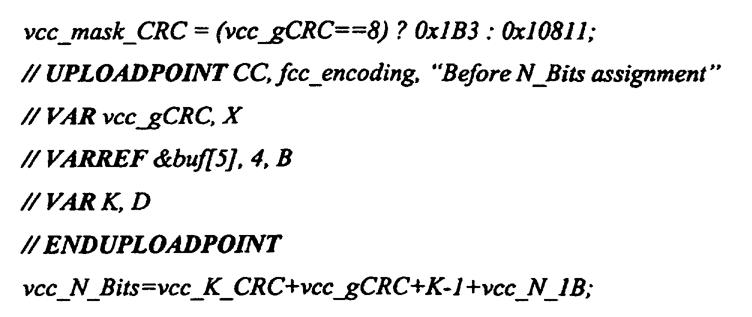

Before the compiling phase, each instruction of the source program is scanned from start to end. When an upload point is reached, the DSP_TESTER through the program TESTERPARSER substitutes each pseudo-instruction of the upload point with corresponding instructions of a subroutine. During DSP program execution if the reached corresponding instructions belongs to an enabled upload point, its corresponding subroutine will display the variables to be monitored on the TESTER_CONSOLE, otherwise it will not produce any effect.

The source program to be executed by the TARGET_DSP is modified as follows: 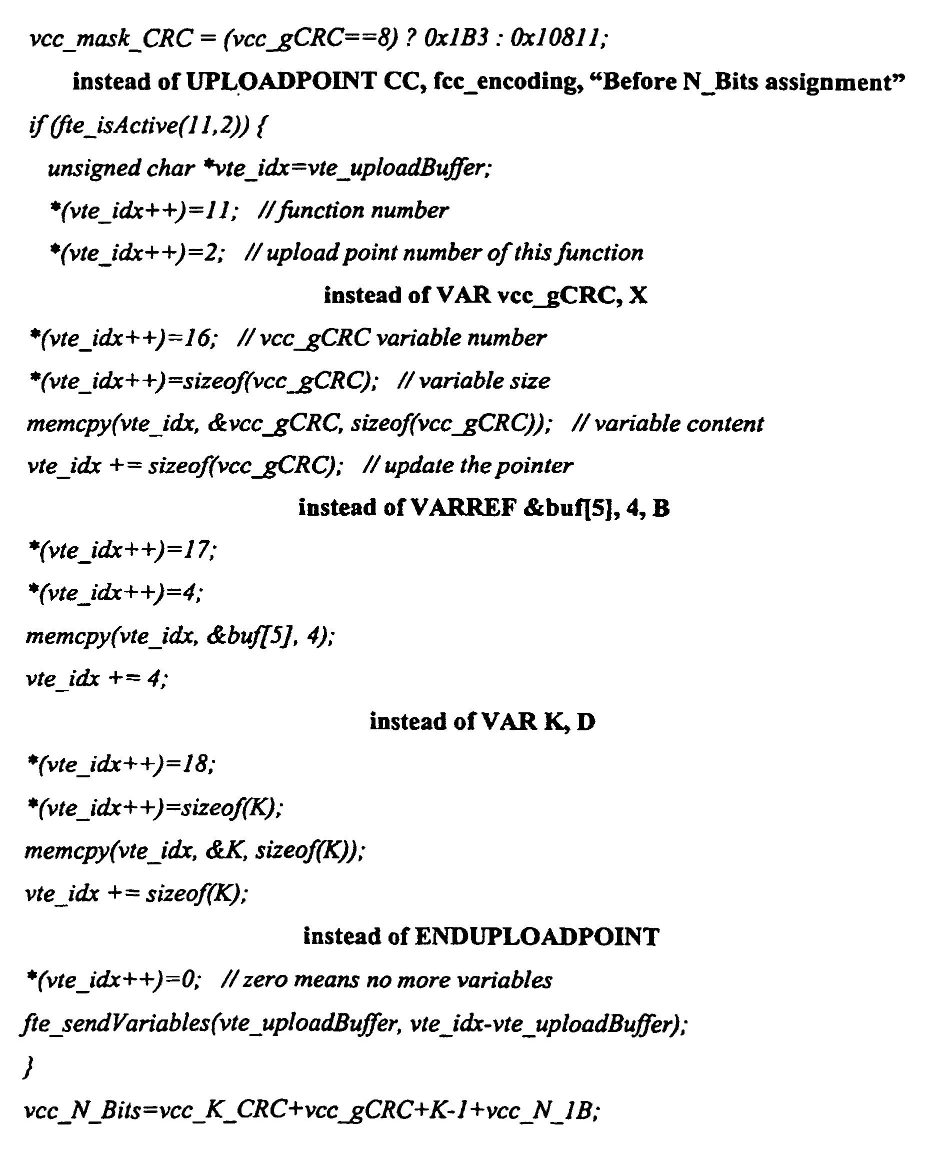 Obviously the bold rows are not inserted in the modified source program.

The declaration of the variable *"vte_uploadBuffer"* can be as follows:
*#define TESTER_BUFFER_SIZE 3000*
*unsigned char vte_uploadBuffer[TESTER_BUFFER_SIZE];*

The prototype of the function "*fte_isActive*" is
*int fte_isActive(f_num, up_num)*
and it returns a TRUE value if the upload point *"up_num"* of the function *"f_num"* is enabled: therefore the instructions inserted by the TESTERPARSER will send the values of variables to be monitored only if the corresponding upload point is enabled.

The function "*fte_sendVariables*" uploads to the DSP_TESTER the variables contained in *"buffer"* with *"size"* bytes, and its prototype is:
*void fte_sendVariables(void *buffer, int size)*

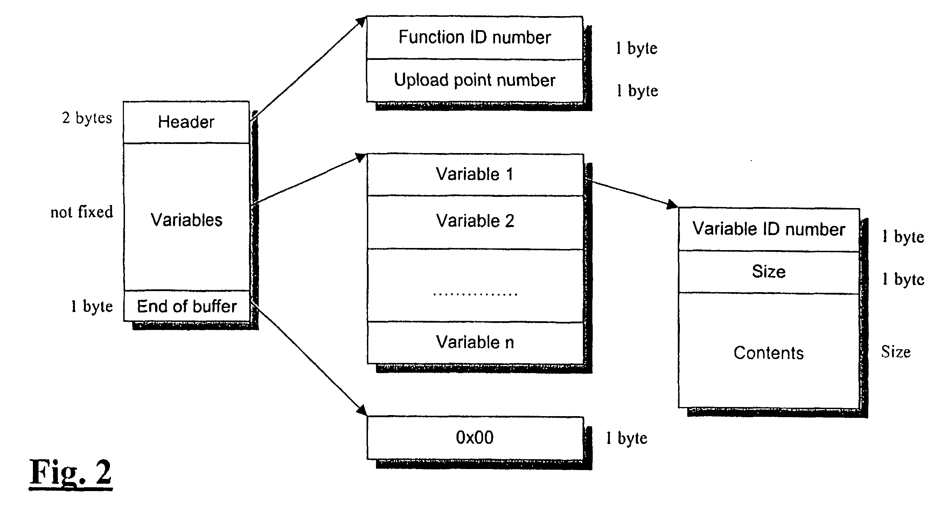

The structure of *"buffer"* is depicted in Fig. 2 and can be easily understood by the skilled person without further explanations.

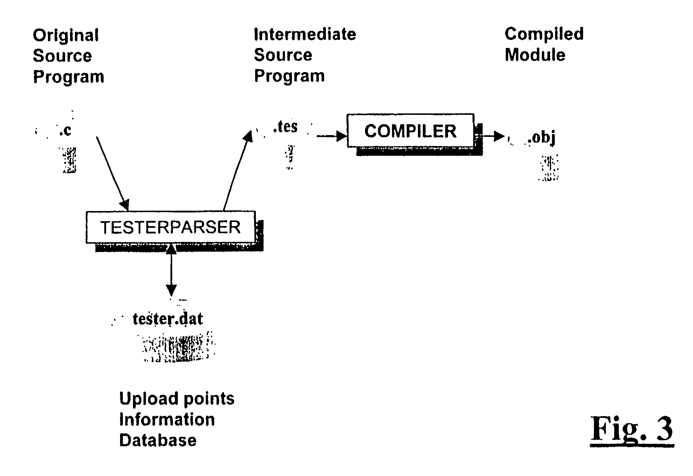

The substitution of the pseudo-instructions is carried out by the program TESTERPARSER installed in the developer compilation system, according to the basic diagram of Fig. 3. When a source program *.C containing pseudo-instructions must be compiled, the TESTERPARSER executes a pre-compiling phase producing an intermediate program *.TES, in which each upload point of the source program *.c has been substituted by corresponding instructions.

The program TESTERPARSER also assigns an identifier number to each module, function, upload point and variable of the source program, and write all such information in a file of data TESTER.DAT. Such identification numbers are used in the instructions substituted to the pseudo-instructions, in order to identify each upload point and to address each variable of the source program to be displayed. Finally the intermediate program *.TES is compiled producing the object file *.OBJ, that is ready to be linked in the executable program.

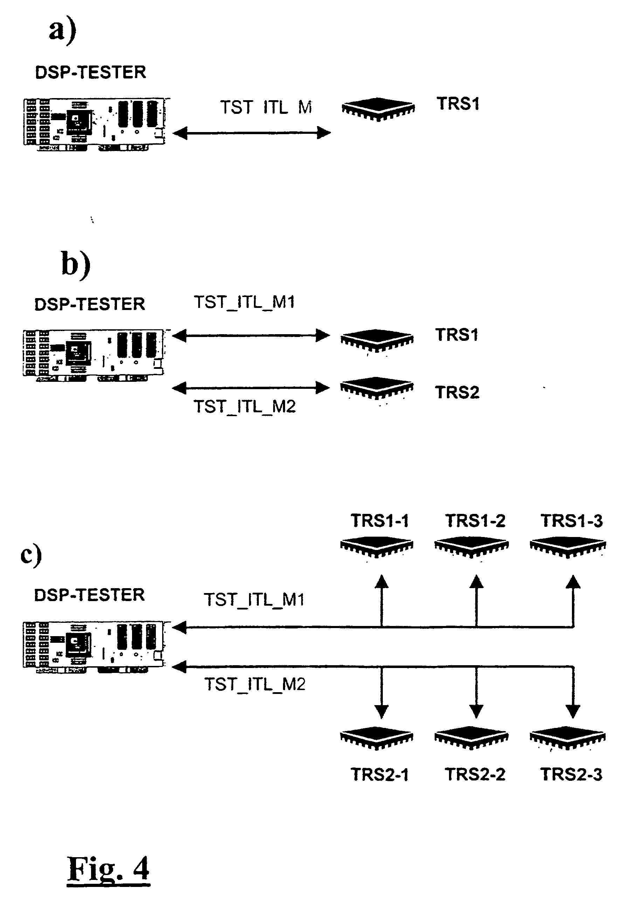

The invention can be usefully applied also to an user system comprising several DSPs connected in parallel to the DSP_TESTER. Such a situation is depicted in Fig. 4 and in particular:
- in fig. 4a a single DSP is represented;
- in fig. 4b a pair of DSPs are represented;
- in fig. 4c a pair of groups of DSPs connected in parallel by a relevant link are represented.

When a several DSPs, within a group, are connected to the DSP_TESTER, only one DSP is enabled at the time, by a respective enabling command SWITCH_ON sent by the DSP_TESTER, and can exchange information with the DSP_TESTER, while the others DSP are disabled.

This is only a possible protocol for managing the data exchange between the DSP_TESTER and the DSP, though the invention can be conveniently applied using any other communication protocol.

While a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. A method for real time monitoring the evolution of the state of variables of a compiled program, obtained from a microprocessor source program, running on a user system (TARGET) by a test system (TESTER) functionally coupled to the user system without arresting the run of the compiled program, comprising the operations of inserting in the source program predetermined information elements,
**characterized in that** said information elements are a number of packets (UPLOADPOINT, ..., ENDUPLOADPOINT) of pseudo-instructions, that specify variables whose state is to be monitored by the test system (TESTER) during the running of the compiled program, said packets (UPLOADPOINT, ..., ENDUPLOADPOINT) being enabled or disabled by the test system (TESTER);
• pre-compiling said source program obtaining an intermediate program, by:
- scanning one at the time the instructions of said source program from start to end of the source program,
- upon reaching any one of said inserted packets (UPLOADPOINT, ..., ENDUPLOADPOINT) during said scanning, substituting each pseudo-instruction contained in the packet with corresponding instructions constituting a predetermined subroutine for displaying through the test system (TESTER), during the running of the compiled program and without stopping it, the state of variables specified in the currently reached packet if the currently reached packet (UPLOADPOINT, ..., ENDUPLOADPOINT) of pseudo-instructions is enabled;
• obtaining said compiled program by compiling said intermediate program.

2. The method of claim 1, wherein said source program produces a list of program modules each comprising a sequence of functions, and each of said packets (UPLOADPOINT, ..., ENDUPLOADPOINT) of pseudo-instructions comprises:
• an identification label of the program module (*Module id*) and of the name of the function (*function*) within which the packet is inserted;
• a quoted text (*comment*) written for comment purposes;
• the name (*variable*) of the variables whose state is to be monitored and the format (*view type*) in which the value of variables must be displayed through the test system (TESTER).

3. The method of claim 2, wherein each of said packets (UPLOADPOINT, ..., ENDUPLOADPOINT) of pseudo-instructions (UPLOAD_POINT) also comprises a pointer to the starting point of a memory sector (*memory address*) whose content is to be displayed, the size (*size*) of said memory sector and the format (*view type*) in which the content of said memory sector must be displayed through the test system (TESTER).

4. A system for debugging a microprocessor source program comprising an user system (TARGET) provided with a DSP (TARGET_DSP) executing the program to be debugged, a test system (TESTER), monitoring the evolution of the program, functionally coupled to the user system (TARGET), said test system (TESTER) comprising a PC (TESTER_CONSOLE) coupled to said user system (TARGET) through a PC Host Board, ***according to the method of claim 1,*** **characterized in that**
said source program to be debugged contains packets (UPLOADPOINT, ..., ENDUPLOADPOINT) of pseudo-instructions specifying at least a name of a variable to be monitored;
said PC Host Board comprises another DSP (DSP_TESTER), functionally connected to the first DSP through a serial port, enabling or disabling said packets (UPLOADPOINT, ..., ENDUPLOADPOINT) of pseudo-instructions, substituting before compiling said source program each pseudo-instruction contained in an enabled packet with corresponding instructions constituting a predetermined subroutine, for displaying through the PC (TESTER_CONSOLE) the value of said variable while the program is running and without stopping it.

5. The system of claim 4 wherein said PC (TESTER_CONSOLE) has a 32 bit Windows operating system, said PC Host Board is a PCI/C6202-EVM board, said other DSP (DSP_TESTER) is a TMS320C6202 of Texas Instruments®, and said first DSP (target_DSP) is a TMS320C6x DSP of Texas Instruments®.

6. The system according to claim 4 or 5 wherein said user system (TARGET) comprises a plurality of DSPs (TRS1, TRS2, ...) connected by a link (TST_ITL_M) to said other DSP (DSP_TESTER).

7. The system according to claim 4 or 5 wherein said user system (TARGET) comprises a at least two groups of DSPs (TRSI-1, TRS1-2, ..., TRS2-1, TRS2-2, ...) connected in parallel by a relevant link (TST_ITL_M1, TST_ITL_M2) to said other DSP (DSP_TESTER).

8. The system according to claim 6 and 7 wherein only one DSP, within a group, is enabled at the time and can exchange information with the test system (TESTER) while the others DSP are disabled.

9. The system according to claim 8, wherein the enabled DSP receives an enabling command sent by the test system (TESTER).

## Patentansprüche

1. Verfahren zur Echtzeit-Überwachung der Entwicklung des Status von Variablen in einem kompilierten Programm, das aus einem Mikroprozessor-Quellprogramm hervorgeht und auf einem Anwendersystem (TARGET) von einem Testsystem (TESTER) ausgeführt wird, das funktional mit dem Anwendersystem gekoppelt ist, ohne dass die Ausführung des kompilierten Programms hierfür unterbrochen werden muss, und Operationen umfasst, um vordefinierte Informationselemente in das Quellprogramm einzufügen,
**dadurch gekennzeichnet, dass** es sich bei besagten Informationselementen um eine Anzahl von Paketen (UPLOADPOINT, ..., ENDUPLOADPOINT) mit Pseudo-Anweisungen handelt, die Variablen spezifizieren, deren Status durch ein Testsystem (TESTER) während des Ablaufs des kompilierten Programms überwacht werden soll, wobei besagte Pakete (UPLOADPOINT, ..., ENDUPLOADPOINT) jeweils durch das Testsystem (TESTER) aktiviert bzw. deaktiviert werden;
• das besagte Quellprogramm vorab kompiliert wird, um ein Zwischenprogramm zu erhalten, indem:
- die Anweisungen in besagtem Quellprogramm von Anfang bis Ende des Quellprogramms einzeln überprüft werden,
- bei Erreichen eines der besagten eingefügten Pakete (UPLOADPOINT, ..., ENDUPLOADPOINT) während der besagten Überprüfung die einzelnen Pseudo-Anweisungen, die im Paket enthalten sind, ersetzt werden durch entsprechende Anweisungen, die eine vordefinierte Subroutine ergeben, mit deren Hilfe auf dem Testsystem (TESTER) während der Ausführung des kompilierten Programms und ohne dieses anzuhalten der Status der in dem derzeit erreichten Paket angegebenen Variablen angezeigt wird, sofern das derzeit erreichte Paket (UPLOADPOINT, ..., ENDUPLOADPOINT) mit Pseudo-Anweisungen aktiviert ist;
• das besagte kompilierte Programm durch Kompilieren des besagten Zwischenprogramms erzeugt wird.

2. Verfahren nach Anspruch 1, bei dem besagtes Quellprogramm eine Liste von Programmmodulen erzeugt, die jeweils aus einer Abfolge von Funktionen bestehen, und jedes der besagten Pakete (UPLOADPOINT, ..., ENDUPLOADPOINT) mit Pseudo-Anweisungen Folgendes beinhaltet:
• ein Kennetikett des Programmmoduls (*Module id*) sowie den Namen der Funktion (function), in die das Paket eingefügt wird;
• einen Text in Anführungszeichen (*comment*) zu Kommentierungszwecken;
• den Namen (*variable*) der variablen, deren Status überwacht werden soll, sowie das Format (*view type*), in dem der Wert der Variablen vom Testsystem (TESTER) angezeigt werden soll.

3. Verfahren nach Anspruch 2, bei dem jedes der besagten Pakete (UPLOADPOINT, ..., ENDUPLOADPOINT) mit Pseudo-Anweisungen (UPLOAD_POINT) außerdem einen Zeiger auf die Startadresse eines Speicherbereichs (*memory address*) umfasst, dessen Inhalt angezeigt werden soll, sowie die Größe (*size*) des besagten Speicherbereichs und das Format (*view type*), in dem der Inhalt des besagten Speicherbereichs durch das Testsystem (TESTER) dargestellt werden soll.

4. System zum Austesten (Debugging) eines Mikroprozessor-Quellprogramms, das ein Anwendersystem (TARGET) umfasst, das mit einem DSP (TARGET_DSP) ausgestattet ist, der das auszutestende Programm ausführt, und ein Testsystem (TESTER), das die Entwicklung des Programms überwacht und funktional mit dem Anwendersystem (TARGET) gekoppelt ist, wobei besagtes Testsystem (TESTER) aus einem mittels einer PC-Host-Karte an das besagte Anwendersystem (TARGET) angeschlossenen PC (TESTER_CONSOLE) ***gemäß dem Verfahren nach Anspruch 1*** besteht, **dadurch gekennzeichnet, dass**
besagtes auszutestendes Quellprogramm Pakete (UPLOADPOINT, ..., ENDUPLOADPOINT) mit Pseudo-Anweisungen enthält, die mindestens einen Namen einer zu überwachenden Variablen angeben;
besagte PC-Host-Karte einen weiteren DSP (DSP_TESTER) enthält, der über einen seriellen Port funktional mit dem ersten DSP verbunden ist und die besagten Pakete (UPLOADPOINT, ..., ENDUPLOADPOINT) mit Pseudo-Anweisungen aktiviert bzw. deaktiviert sowie vor der Kompilierung des besagten Quellprogramms jede in einem aktivierten Paket enthaltene Pseudo-Anweisung durch entsprechende Anweisungen ersetzt, die eine vordefinierte Subroutine ergeben, um auf dem PC (TESTER_CONSOLE) den Wert der besagten Variablen anzeigen zu können, während das Programm abläuft, und ohne dass es hierfür angehalten werden muss.

5. System nach Anspruch 4, bei dem auf dem besagten PC (TESTER_CONSOLE) ein Windows-Betriebssystem mit 32 Bit läuft, besagte PC-Host-Karte eine Karte vom Typ PCI/C6202-EVM ist, besagter weiterer DSP (DSP_TESTER) ein TMS320C6202 von Texas Instruments® ist und besagter erster DSP (target_DSP) ein TMS320C6x-DSP von Texas Instruments® ist.

6. System nach Anspruch 4 oder 5, bei dem besagtes Anwendersystem (TARGET) eine Vielzahl an DSPs (TRS1, TRS2, ...) enthält, die über einen Link (TST_ITL_M) mit dem besagten anderen DSP (DSP_TESTER) verbunden sind.

7. System nach Anspruch 4 oder 5, bei dem besagtes Anwendersystem (TARGET) mindestens zwei Gruppen von DSPs (TRS1-1, TRS1-2, ..., TRS2-1, TRS2-2, ...) umfasst, die durch einen entsprechenden Link (TST_ITL_M1, TST_ITL_M2) parallel mit besagtem anderem DSP (DSP_TESTER) verbunden sind.

8. System nach Anspruch 6 und 7, bei dem zu einem gegebenen Zeitpunkt lediglich ein DSP aus einer Gruppe aktiviert ist und Informationen mit dem Testsystem (TESTER) austauschen kann, während die anderen DSPs deaktiviert sind.

9. System nach Anspruch 8, bei dem der aktivierte DSP einen vom Testsystem (TESTER) gesendeten Aktivierungsbefehl empfängt.

## Revendications

1. Procédé pour surveiller en temps réel l'évolution de l'état de variables d'un programme compilé, obtenu d'un programme source de microprocesseur, exécuté sur un système utilisateur (TARGET) par un système de test (TESTER) fonctionnellement couplé au système utilisateur sans arrêter l'exécution du programme compilé, comprenant les opérations d'insertion dans le programme source d'éléments d'information prédéterminés,
**caractérisé en ce que** lesdits éléments d'information sont un certain nombre de paquets (UPLOADPOINT, ..., ENDUPLOADPOINT) de pseudo-instructions qui spécifient des variables dont l'état doit être surveillé par le système de test (TESTER) durant l'exécution du programme compilé, lesdits paquets (UPLOADPOINT, ..., ENDUPLOADPOINT) étant activés ou désactivés par le système de test (TESTER) ;
• de pré-compilation dudit programme source pour obtenir un programme intermédiaire, en :
- analysant une à la fois les instructions dudit programme source du début à la fin du programme source ;
- quand l'un quelconque desdits paquets insérés (UPLOADPOINT, ..., ENDUPLOADPOINT) est atteint durant ladite analyse, en substituant à chaque pseudo-instruction contenue dans le paquet des instructions correspondantes constituant un sous-programme déterminé pour afficher dans le système de test (TESTER), durant l'exécution du programme compilé et sans l'arrêter, l'état de variables spécifiées dans le paquet atteint à ce moment-là si le paquet atteint à ce moment-là (UPLOADPOINT, ..., ENDUPLOADPOINT) de pseudo-instructions est activé ;
• d'obtention dudit programme compilé en compilant ledit programme intermédiaire.

2. Procédé selon la revendication 1, dans lequel ledit programme source produit une liste de modules de programme comprenant chacun une séquence de fonctions, et chacun desdits paquets (UPLOADPOINT, ..., ENDUPLOADPOINT) de pseudo-instructions comprend :
• une étiquette d'identification du module de programme (*Module id*) et du nom de la fonction (*function*) à l'intérieur de laquelle le paquet est inséré ;
• un texte commenté (*comment*) écrit aux fins de commentaire ;
• le nom (*variable*) des variables dont l'état doit être surveillé et le format (*view type*) dans lequel la valeur des variables doit être affichée dans le système de test (TESTER).

3. Procédé selon la revendication 2, dans lequel chacun desdits paquets (UPLOADPOINT, ..., ENDUPLOADPOINT) de pseudo-instructions (UPLOAD_POINT) comprend aussi un pointeur vers le point de départ d'un secteur de mémoire (*memory address*) dont le contenu doit être affiché, la taille (*size*) dudit secteur de mémoire et le format (*view type*) dans lequel le contenu dudit secteur de mémoire doit être affiché dans le système de test (TESTER).

4. Système pour déboguer un programme source de microprocesseur comprenant un système utilisateur (TARGET) pourvu d'un processeur numérique de signaux (TARGET_DSP) exécutant le programme à déboguer, un système de test (TESTER), surveillant l'évolution du programme, fonctionnellement couplé au système utilisateur (TARGET), ledit système de test (TESTER) comprenant un ordinateur personnel (TESTER_CONSOLE) couplé audit système utilisateur (TARGET) par une carte pour ordinateur personnel hôte, ***conformément au procédé selon la*** ***revendication 1*****, caractérisé en ce que**
ledit programme source à déboguer contient des paquets (UPLOADPOINT, ... , ENDUPLOADPOINT) de pseudo-instructions spécifiant au moins un nom d'une variable à surveiller ;
ladite carte pour ordinateur personnel hôte comprend un autre processeur numérique de signaux (DSP_TESTER), fonctionnellement connecté au premier processeur numérique de signaux par un port série, activant ou désactivant lesdits paquets (UPLOADPOINT, ..., ENDUPLOADPOINT) de pseudo-instructions, substituant avant de compiler ledit programme source, à chaque pseudo-instruction contenue dans un paquet activé des instructions correspondantes constituant un sous-programme déterminé, pour afficher sur l'ordinateur personnel (TESTER_CONSOLE) la valeur de ladite variable pendant que le programme est exécuté et sans l'arrêter.

5. Système selon la revendication 4, dans lequel ledit ordinateur personnel (TESTER_CONSOLE) comporte un système d'exploitation Windows 32 bits, ladite carte pour ordinateur personnel hôte est une carte PCI/C6202-EVM, ledit autre processeur numérique de signaux (DSP_TESTER) est un TMS320C6202 de Texas Instruments®, et ledit premier processeur numérique de signaux (target_DSP) est un TMS320C6x DSP de Texas Instruments®.

6. Système selon la revendication 4 ou 5, dans lequel ledit système utilisateur (TARGET) comprend une pluralité de processeurs numériques de signaux (TRS1, TRS2, ...) connectés par une liaison (TST_ITL_M) audit autre processeur numérique de signaux (DSP_TESTER).

7. Système selon la revendication 4 ou 5, dans lequel ledit système utilisateur (TARGET) comprend au moins deux groupes de processeurs numériques de signaux (TRS1-1, TRS1-2, ..., TRS2-1, TRS2-2, ...) connectés en parallèle par une liaison appropriée (TST_ITL_M1, TST_ITL_M2) audit autre processeur numérique de signaux (DSP_TESTER).

8. Système selon les revendications 6 et 7, dans lequel un seul processeur numérique de signaux, au sein d'un groupe, est activé à la fois et peut échanger des informations avec le système de test (TESTER) pendant que les autres processeurs numériques de signaux sont désactivés.

9. Système selon la revendication 8, dans lequel le processeur numérique de signaux activé reçoit une commande d'activation envoyée par le système de test (TESTER).
